# EUROPEAN PATENT APPLICATION

(11) **EP 4 171 113 A1**
(43) Date of publication of application: **26.04.2023**
(21) Application number: 21829296.9
(22) Date of filing: 17.06.2021
(51) Int. Cl.: H04W 28/12

(54) **FLOW CONTROL METHOD AND DEVICE**

(30) Priority: 22.06.2020 CN 202010574058
(71) Applicant: Datang Mobile Communications Equipment Co., Ltd., Beijing 100085 (CN)
(72) Inventor: WANG, Da, Beijing 100085 (CN); ZENG, Erlin, Beijing 100085 (CN)
(74) Representative: Cabinet Nony
(86) International application number: PCT/CN2021/100625
(87) International publication number: WO 2021/259134

(57) **Abstract**

Disclosed are a flow control method and device, for solving the problem existing in the prior art that a process of relieving congestion of nodes is relatively slow. In the present disclosure, a target node sends, to a second node, flow control information of the target node and/or flow control information of at least one first node; the second node adjusts, according to the received flow control information, the volume of data sent to the target node; if the first node is a child node and/or a lower layer node of the child node, the second node is a parent node and/or an upper layer node of the parent node; and if the first node is a parent node and/or an upper layer node of the parent node, the second node is a child node and/or a lower layer node of the child node. According to flow control information of at least one of the parent node of the target node, the upper layer node of the parent node, the child node and the lower layer node of the child node, the second node can adjust the volume of data sent to the target node, and thus the congestion situation of nodes can be quickly relieved, increasing the data transmission efficiency.

## Description

### Cross-Reference of Related Applications

The present application claims the priority from Chinese Patent Application No. 202010574058.2, filed with the Chinese Patent Office on June 22, 2020 and entitled "Flow Control Method and Device", which is hereby incorporated by reference in its entirety.

### Field of Invention

The disclosure relates to the field of wireless communication technologies, and particularly to a flow control method and device.

### Background

The Integrated Access and Backhaul (IAB) network technology achieves the purpose of extending the coverage range of the base station by relaying wireless signals among a plurality of nodes. The IAB network technology is a network networking mode for the future 5th Generation (5G) to solve the problem of the coverage range of the base station.

At present, in the IAB network, the flow control mechanism is: a child node reports its buffer size (buffer data size) to a parent node, and the parent node may reduce the data sent to the child node according to the buffer size information of the child node, thereby alleviating the congestion of the child node. However, this mechanism cannot quickly solve the congestion of nodes in the IAB network, and may cause congestion conduction of nodes. For example, a child node sends the buffer size to its parent node after the congestion occurs, and then the parent node will reduce the data sent to the child node. Since the data is not sent in time, the parent node will also be congested. After the parent node is congested, the parent node sends flow control to its parent node, and the parent node of the parent node reduces the data sent to the parent node, which is a relatively slow process.

To sum up, the process is relatively slow when the flow control mechanism is used to alleviate the congestion of nodes in the related art.

### Brief Summary

The disclosure provides a flow control method and device, so as to solve the problem in the prior art that the process is relatively slow when the flow control mechanism is used to alleviate the congestion of nodes.

Based on the above problem, in a first aspect, an embodiment of the disclosure provides a flow control method, including:
sending, by a target node, flow control information of the target node and/or flow control information of at least one first node to a second node, the flow control information is used for adjusting amount of data sent to the target node;
wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

Optionally, the target node sends the flow control information of the target node and/or the flow control information of at least one first node to the second node in some or all of following ways:
in a first way: sending, by the target node, the flow control information of the target node and/or the flow control information of at least one first node to the second node according to a buffer size of the target node;
in a second way: sending, by the target node, the flow control information of the target node and/or the flow control information of at least one first node to the second node according to a timestamp in the flow control information;
in a third way: sending, by the target node, the flow control information of the target node and/or the flow control information of at least one first node to the second node if the target node receives request information from the second node, wherein the request information is used to request the target node to send the flow control information.

Optionally, sending, by the target node, the flow control information of the target node and/or the flow control information of at least one first node to the second node, includes:
sending, by the target node, the flow control information of the target node and/or the flow control information of at least one first node to the second node through an RRC (Radio Resource Control) message or an MAC CE (Medium Access Control Control Element).

Optionally, sending, by the target node, the flow control information of the target node and/or the flow control information of at least one first node to the second node according to the buffer size of the target node, includes:
sending, by the target node, the flow control information of at least one first node to the second node if the buffer size of the target node exceeds a first threshold value; and/or
sending, by the target node, the flow control information of the target node to the second node or the flow control information of the target node and the flow control information of at least one first node to the second node if the buffer size of the target node exceeds a second threshold value;
wherein the first threshold value is less than or equal to the second threshold value.

Optionally, the method further includes:
determining, by the target node, a first threshold value and/or a second threshold value of a host node, or a first threshold value and/or a second threshold value configured by an OAM (Operations Administration and Maintenance) device.

Optionally, each flow control information corresponds to a path or an RLC (Radio Link Control) channel.

Optionally, there is a correspondence between first threshold values and flow control information types;
sending, by the target node, the flow control information of the target node and/or the flow control information of at least one first node to the second node according to the buffer size of the target node, includes:
sending, by the target node, the flow control information of at least one first node corresponding to a flow control information type to the second node if the buffer size of the target node exceeds a first threshold value corresponding to the flow control information type; and/or
sending, by the target node, the flow control information of the target node corresponding to a flow control information type to the second node or the flow control information of the target node corresponding to the flow control information type and the flow control information of at least one first node corresponding to the flow control information type to the second node if the buffer size of the target node exceeds a second threshold value corresponding to the flow control information type;
wherein a first threshold value is less than or equal to a second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

Optionally, sending, by the target node, the flow control information of the target node and/or the flow control information of at least one first node to the second node according to the timestamp in the flow control information, includes:
sending, by the target node, the flow control information of the target node to the second node if a difference between the timestamp in the flow control information of the target node and a current moment is less than or equal to a time threshold value; and/or
sending, by the target node, the flow control information of the first node to the second node if a difference between the timestamp in the flow control information of the first node and the current moment is less than or equal to the time threshold value.

Optionally, the method further includes:
discarding, by the target node, the flow control information if the difference between the timestamp in the flow control information of the target node or the flow control information of the first node and the current moment is greater than the time threshold value.

Optionally, the method further includes:
determining, by the target node, the time threshold value according to a configuration of a host node or an OAM device.

Optionally, each flow control information corresponds to a path or an RLC channel.

Optionally, there is a correspondence between the time threshold value and flow control information type, and the method further includes:
sending, by the target node, the flow control information of the target node corresponding to the flow control information type to the second node if a difference between the timestamp in the flow control information of the target node corresponding to the flow control information type and the current moment is less than or equal to the time threshold value; and/or
sending, by the target node, the flow control information of the first node corresponding to the flow control information type to the second node if a difference between the timestamp in the flow control information of the first node corresponding to the flow control information type and the current moment is less than or equal to the time threshold value;
wherein: among different flow control information types, a time threshold value corresponding to a flow control information type with high priority is greater than a time threshold value corresponding to a flow control information type with low priority, and the flow control information type is path or RLC channel.

Optionally, the flow control information includes ID (Identifier) information of a corresponding node, wherein the ID information includes some or all of:
cell ID information;
address information;
BAP (Backhaul Adaptation Protocol) address information.

In a second aspect, an embodiment of the disclosure provides a flow control device, including: a processor, a memory and a transceiver:
wherein the processor is configured to read a program in the memory and perform:
sending flow control information of a target node and/or flow control information of at least one first node to a second node, the flow control information is used for adjusting amount of data sent to the target node;
wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

Optionally, the processor sends the flow control information of the target node and/or the flow control information of at least one first node to the second node in some or all of following ways:
in a first way: send the flow control information of the target node and/or the flow control information of at least one first node to the second node according to a buffer size of the target node;
in a second way: send the flow control information of the target node and/or the flow control information of at least one first node to the second node according to a timestamp in the flow control information;
in a third way: send the flow control information of the target node and/or the flow control information of at least one first node to the second node if the target node receives request information from the second node, wherein the request information is used to request the target node to send the flow control information.

Optionally, when sending the flow control information of the target node and/or the flow control information of at least one first node to the second node, the processor is specifically configured to:
send the flow control information of the target node and/or the flow control information of at least one first node to the second node through an RRC message or an MAC CE.

Optionally, when sending the flow control information of the target node and/or the flow control information of at least one first node to the second node according to the buffer size of the target node, the processor is specifically configured to:
send the flow control information of at least one first node to the second node if the buffer size of the target node exceeds a first threshold value; and/or
send the flow control information of the target node to the second node or the flow control information of the target node and the flow control information of at least one first node to the second node if the buffer size of the target node exceeds a second threshold value;
wherein the first threshold value is less than or equal to the second threshold value.

Optionally, the processor is further configured to:
determine a first threshold value and/or a second threshold value of a host node, or a first threshold value and/or a second threshold value configured by an OAM device.

Optionally, each flow control information corresponds to a path or an RLC channel.

Optionally, there is a correspondence between first threshold values and flow control information types; and when sending the flow control information of the target node and/or the flow control information of at least one first node to the second node according to the buffer size of the target node, the processor is specifically configured to:
send the flow control information of at least one first node corresponding to a flow control information type to the second node if the buffer size of the target node exceeds a first threshold value corresponding to the flow control information type; and/or
send the flow control information of the target node corresponding to a flow control information type to the second node or the flow control information of the target node corresponding to the flow control information type and the flow control information of at least one first node corresponding to the flow control information type to the second node if the buffer size of the target node exceeds a second threshold value corresponding to the flow control information type;
wherein a first threshold value is less than or equal to a second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

Optionally, when sending the flow control information of the target node and/or the flow control information of at least one first node to the second node according to the timestamp in the flow control information, the processor is specifically configured to:
send the flow control information of the target node to the second node if a difference between the timestamp in the flow control information of the target node and a current moment is less than or equal to a time threshold value; and/or
send the flow control information of the first node to the second node if a difference between the timestamp in the flow control information of the first node and the current moment is less than or equal to the time threshold value.

Optionally, the processor is further configured to:
discard the flow control information if the difference between the timestamp in the flow control information of the target node or the flow control information of the first node and the current moment is greater than the time threshold value.

Optionally, the processor is further configured to:
determine the time threshold value according to a configuration of a host node or an OAM device.

Optionally, each flow control information corresponds to a path or an RLC channel.

Optionally, there is a correspondence between the time threshold value and flow control information type; and the processor is specifically configured to:
send the flow control information of the target node corresponding to the flow control information type to the second node if a difference between the timestamp in the flow control information of the target node corresponding to the flow control information type and the current moment is less than or equal to the time threshold value; and/or
send the flow control information of the first node corresponding to the flow control information type to the second node if a difference between the timestamp in the flow control information of the first node corresponding to the flow control information type and the current moment is less than or equal to the time threshold value;
wherein: among different flow control information types, a time threshold value corresponding to a flow control information type with high priority is greater than a time threshold value corresponding to a flow control information type with low priority, and the flow control information type is path or RLC channel.

Optionally, the flow control information includes ID information of a corresponding node, wherein the ID information includes some or all of:
cell ID information;
address information;
BAP address information.

In a third aspect, an embodiment of the disclosure provides another flow control device, including:
a sending module, configured to send flow control information of a target node and/or flow control information of at least one first node to a second node, the flow control information is used for adjusting amount of data sent to the target node;
wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

Optionally, the sending module sends the flow control information of the target node and/or the flow control information of at least one first node to the second node in some or all of following ways:
in a first way: send the flow control information of the target node and/or the flow control information of at least one first node to the second node according to a buffer size of the target node;
in a second way: send the flow control information of the target node and/or the flow control information of at least one first node to the second node according to a timestamp in the flow control information;
in a third way: send the flow control information of the target node and/or the flow control information of at least one first node to the second node if the target node receives request information from the second node, wherein the request information is used to request the target node to send the flow control information.

Optionally, when sending the flow control information of the target node and/or the flow control information of at least one first node to the second node, the sending module is specifically configured to:
send the flow control information of the target node and/or the flow control information of at least one first node to the second node through an RRC message or an MAC CE.

Optionally, when sending the flow control information of the target node and/or the flow control information of at least one first node to the second node according to the buffer size of the target node, the sending module is specifically configured to:
send the flow control information of at least one first node to the second node if the buffer size of the target node exceeds a first threshold value; and/or
send the flow control information of the target node to the second node or the flow control information of the target node and the flow control information of at least one first node to the second node if the buffer size of the target node exceeds a second threshold value;
wherein the first threshold value is less than or equal to the second threshold value.

Optionally, the device further includes a determining module configured to:
determine a first threshold value and/or a second threshold value of a host node, or a first threshold value and/or a second threshold value configured by an OAM device.

Optionally, each flow control information corresponds to a path or an RLC channel.

Optionally, there is a correspondence between first threshold values and flow control information types; and when sending the flow control information of the target node and/or the flow control information of at least one first node to the second node according to the buffer size of the target node, the sending module is specifically configured to:
send the flow control information of at least one first node corresponding to a flow control information type to the second node if the buffer size of the target node exceeds a first threshold value corresponding to the flow control information type; and/or
send the flow control information of the target node corresponding to a flow control information type to the second node or the flow control information of the target node corresponding to the flow control information type and the flow control information of at least one first node corresponding to the flow control information type to the second node if the buffer size of the target node exceeds a second threshold value corresponding to the flow control information type;
wherein a first threshold value is less than or equal to a second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

Optionally, when sending the flow control information of the target node and/or the flow control information of at least one first node to the second node according to the timestamp in the flow control information, the sending module is specifically configured to:
send the flow control information of the target node to the second node if a difference between the timestamp in the flow control information of the target node and a current moment is less than or equal to a time threshold value; and/or
send the flow control information of the first node to the second node if a difference between the timestamp in the flow control information of the first node and the current moment is less than or equal to the time threshold value.

Optionally, the device includes a processing module specifically configured to:
discard the flow control information if the difference between the timestamp in the flow control information of the target node or the flow control information of the first node and the current moment is greater than the time threshold value.

Optionally, the determining module is further configured to:
determine the time threshold value according to a configuration of a host node or an OAM device.

Optionally, each flow control information corresponds to a path or an RLC channel.

Optionally, there is a correspondence between the time threshold value and flow control information type; and the sending module is specifically configured to:
send the flow control information of the target node corresponding to the flow control information type to the second node if a difference between the timestamp in the flow control information of the target node corresponding to the flow control information type and the current moment is less than or equal to the time threshold value; and/or
send the flow control information of the first node corresponding to the flow control information type to the second node if a difference between the timestamp in the flow control information of the first node corresponding to the flow control information type and the current moment is less than or equal to the time threshold value;
wherein: among different flow control information types, a time threshold value corresponding to a flow control information type with high priority is greater than a time threshold value corresponding to a flow control information type with low priority, and the flow control information type is path or RLC channel.

Optionally, the flow control information includes ID information of a corresponding node, wherein the ID information includes some or all of:
cell ID information;
address information;
BAP address information.

In a fourth aspect, an embodiment of the disclosure further provides a computer storable medium storing a computer program thereon, where the program, when executed by a processor, implements the steps of any method described in the first aspect.

In the embodiments of the disclosure, the target node sends the flow control information of the target node and/or the flow control information of at least one first node to the second node, so that the second node adjusts the amount of data sent to the target node according to the received flow control information, wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node. Since the flow control information received by the second node includes the flow control information of the target node and/or at least one first node, the second node can not only adjust the amount of data sent to the target node according to the flow control information of the parent node of the target node and/or the upper layer node of the parent node, but also adjust the amount of data sent to the target node according to the flow control information of the child node of the target node and/or the lower layer node of the child node, so that the congestion of nodes can be quickly alleviated, increasing the data transmission efficiency.

### Brief Description of the Drawings

In order to illustrate the technical solutions in the embodiments of the disclosure more clearly, the accompanying figures which need to be used in describing the embodiments will be introduced below briefly. Obviously the accompanying figures described below are only some embodiments of the disclosure, and other accompanying figures can also be obtained by those ordinary skilled in the art according to these accompanying figures without creative labor.
FIG. 1 is an IAB network topology diagram;
FIG. 2 is a schematic structural diagram of an IAB node;
FIG. 3 is a flowchart of a flow control method according to an embodiment of the disclosure;
FIG. 4 is a flowchart of a second flow control method according to an embodiment of the disclosure;
FIG. 5 is a flowchart of a third flow control method according to an embodiment of the disclosure;
FIG. 6 is a flowchart of a fourth flow control method according to an embodiment of the disclosure;
FIG. 7 is a flowchart of a fifth flow control method according to an embodiment of the disclosure;
FIG. 8 is a flowchart of a sixth flow control method according to an embodiment of the disclosure;
FIG. 9 is a flowchart of a seventh flow control method according to an embodiment of the disclosure;
FIG. 10 is a flowchart of an eighth flow control method according to an embodiment of the disclosure;
FIG. 11 is a schematic structural diagram of a flow control device according to an embodiment of the disclosure;
FIG. 12 is a schematic structural diagram of another flow control device according to an embodiment of the disclosure.

### Detailed Description of the Embodiments

In order to make the objects, technical solutions and advantages of the disclosure clearer, the disclosure will be further illustrated below in details with reference to the accompanying figures. Obviously the described embodiments are merely a part of the embodiments of the disclosure but not all the embodiments. Based upon the embodiments in the disclosure, all of other embodiments obtained by those ordinary skilled in the art without creative work pertain to the protection scope of the disclosure.

In embodiments of the disclosure, "determining B according to A" does not mean that B is only determined according to A, and B may also be determined according to A and other information. "A includes B" does not mean that A only includes B, and A may also include other information, such as C, D, etc.

Furthermore, the word "exemplary" is used to mean serving as an example, instance or illustration in the embodiments of the disclosure. Any embodiment or design scheme described as an "example" in the disclosure should not be construed to be more preferred or advantageous than other embodiments or design schemes. Rather, the use of the word "example" is intended to present the concept in a concrete way.

In embodiments of the disclosure, the information, signal, message and channel may sometimes be used interchangeably. It should be noted that their meanings to be expressed are the same when the differences are not emphasized. "of", "corresponding, relevant" and "corresponding" may sometimes be used interchangeably. It should be noted that their meanings to be expressed are the same when the differences are not emphasized.

The network architectures and service scenarios described in the embodiments of the disclosure are intended to illustrate the technical solutions of the embodiments of the disclosure more clearly, and do not constitute a limitation on the technical solutions provided in the embodiments of the disclosure. As can be known by those ordinary skilled in the art, with the evolution of network architectures and the emergence of new service scenarios, the technical solutions provided in the embodiments of the disclosure are also applicable to similar technical problems.

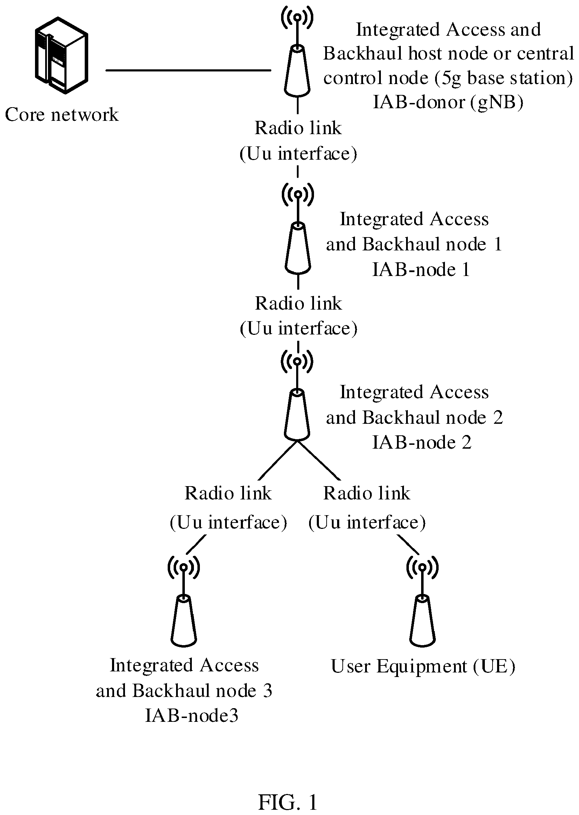

In order to facilitate understanding of the embodiments of the disclosure, a scenario applicable to the embodiments of the disclosure is firstly illustrated in detail by taking the IAB network topology diagram shown in FIG. 1 as an example.

As shown in FIG. 1, the IAB network deployment is composed of an IAB donor (IAB host node or central control node), IAB nodes, and a UE (User Equipment). The IAB donor is configured to connect to the core network, transmit the information of the IAB nodes and the UE back to the core network, and transmit the information of the core network to the IAB nodes and the UE. The IAB donor is also responsible for managing the IAB nodes throughout the IAB network.

The IAB node relays and transmits the information of the UE to the IAB donor through a radio link (Uu interface), and relays and transmits the information of the IAB donor to the UE. The connections between the IAB nodes and between the IAB node and the IAB donor are implemented through radio links, i.e., Uu interfaces.

The relay function of the IAB node is implemented through the BAP layer (Backhaul Adaptation Protocol layer) in the IAB node.

As shown in FIG. 1, in the IAB network, the IAB node 1 is a parent node of the IAB node 2, the IAB node 3 is a child node of the IAB node 2, and the IAB node 3 is a descendant node of the IAB node 1. In Figure 1, the IAB node 1 is an upper layer node connected directly to the IAB node 2, the IAB node 1 is an upper layer node connected indirectly to the IAB node 3, and both the IAB node 1 and the IAB node 2 are upper layer nodes of the IAB node 3; the IAB node 3 is a lower layer node connected directly to the IAB node 2, the IAB node 3 is a lower layer node connected indirectly to the IAB node 1, and both the IAB node 2 and the IAB node 3 are lower layer nodes of the IAB node 1.

Here, the upper layer node may be understood as a node through which a certain node in the IAB network reaches the core network on a certain path, and the lower layer node may be understood as a node through which a certain node reaches the UE on a certain path.

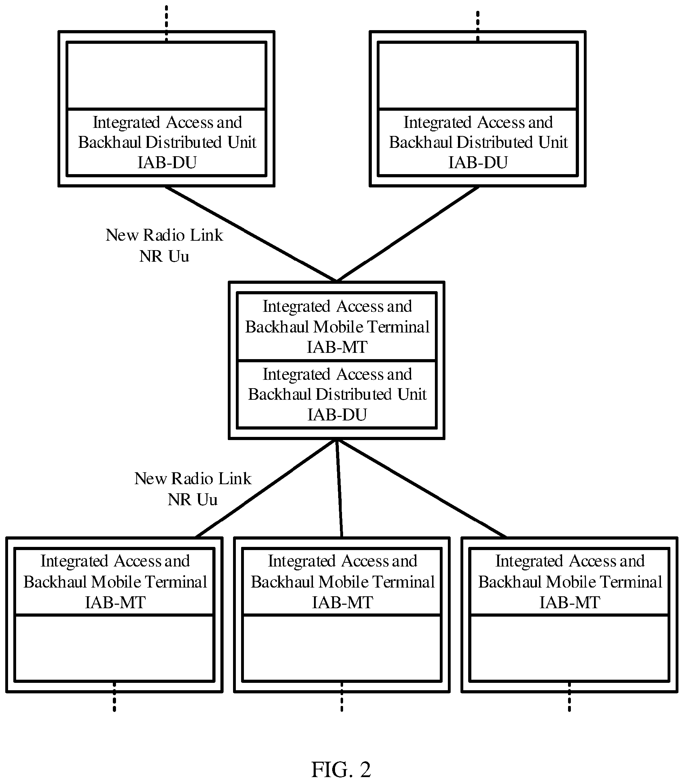

In the existing IAB network topology, one IAB node consists of two parts, as shown in Figure 2, one part is a DU part of the IAB MT (IAB Mobile Termination) connected upward to the base station or the IAB node, which serves as the parent node of the IAB MT; and the other part is an MT part of the IAB DU (IAB Distributed Unit) connected downward to the UE or the IAB node, which serves as the child node of the IAB MT.

At present, in the IAB network, the flow control mechanism is: a child node reports its buffer size (buffer data size) to a parent node, and the parent node may reduce the data sent to the child node according to the buffer size information of the child node, thereby alleviating the congestion of the child node.

The trigger condition of sending the flow control information is: the buffer size of the IAB node is greater than a certain threshold, or the request information of the parent node is received. The request information is the information sent by the parent node to its child node, and the purpose is to trigger the child node to send the flow control information and report the buffer size of the child node.

However, in the related art, only the child node can report the buffer size to the parent node, and the parent node reduces the amount of data sent to the child node according to the received buffer size of the child node. At this time, if the parent node is congested due to unsent data, the parent node will continue to report the buffer size of the parent node, so that the parent node of the parent node reduces the amount of data sent to the parent node.

For example, as shown in Figure 1, when the node 3 is congested, the node 3 reports the flow control information to the node 2, and the node 2 reduces the amount of data sent to the node 3 after receiving the flow control information reported by the node 3. However, at this time, the node 1 does not know that the node 3 is congested, and the node 1 may still send data to the node 2, which may cause the node 2 to be congested. After the node 2 is congested, the node 2 sends the flow control information to the node 1, and the node 1 reduces the amount of data sent to the node 2 after receiving the flow control information sent by the node 2. This process is relatively slow.

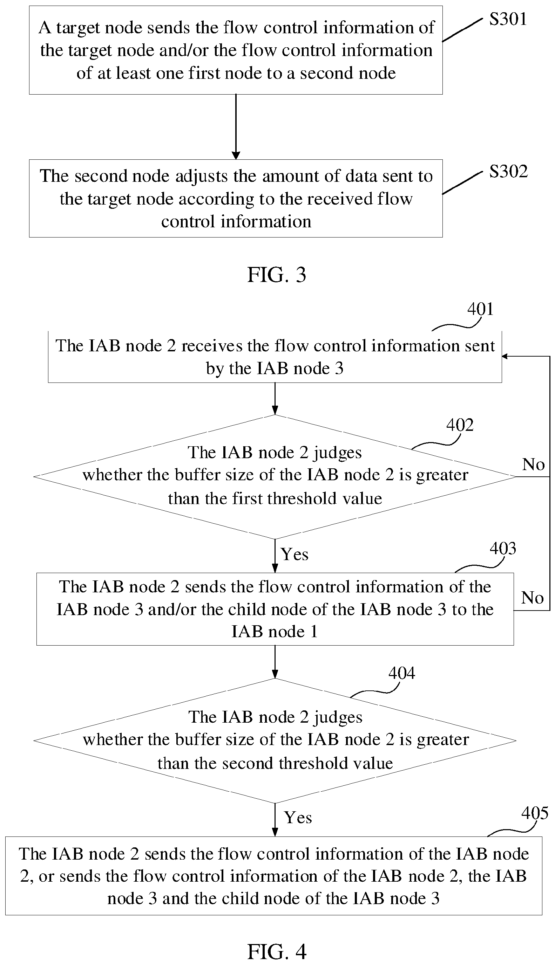

Based on the above problem, as shown in FIG. 3, an embodiment of the disclosure provides a flow control method, which includes:
S301: a target node sends the flow control information of the target node and/or the flow control information of at least one first node to a second node;
S302: the second node adjusts the amount of data sent to the target node according to the received flow control information.

Here, if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

In the IAB network, the data may be transmitted from the core network to the UE, and may also be transmitted from the UE to the core network. Therefore, in the embodiment of the disclosure, when the data is transmitted from the core network to the UE, the first node is a child node of the target node and/or a lower layer node of the child node, and the second node is a parent node of the target node and/or an upper layer node of the parent node; when the data is transmitted from the UE to the core network, the first node is a parent node of the target node and/or an upper layer node of the parent node, and the second node is a child node of the target node and/or a lower layer node of the child node.

In an embodiment of the disclosure, the target node may send the flow control information of the target node and/or the flow control information of at least one first node to the second node through an RRC message or an MAC CE, that is, may place the flow control information of the target node and/or the flow control information of at least one first node in an RRC message to be sent, or may place the flow control information of the target node and/or the flow control information of at least one first node in an MAC CE to be sent.

In implementations, the conditions that trigger the target node to send the flow control information of the target node and/or the flow control information of at least one first node to the second node may include some or all of three following ways, which will be illustrated below respectively.

In a first way: the target node sends the flow control information of the target node and/or the flow control information of at least one first node to the second node according to the buffer size of the target node.

In a specific implementation, the buffer size of the target node may be compared with a threshold value, and then it is determined to send the flow control information of the target node and/or the flow control information of at least one first node to the second node according to the comparison result.

The threshold value may be configured by the host node or OAM device in the IAB network for the target node.

In an embodiment of the disclosure, if the buffer size of the target node exceeds a first threshold, the target node sends the flow control information of at least one first node to the second node; if the buffer size of the target node exceeds a second threshold, the target node sends the flow control information of the target node to the second node or the flow control information of the target node and the flow control information of at least one first node to the second node, where the first threshold value is less than or equal to the second threshold value.

In the process of increasing the buffer size of the target node, when the buffer size of the target node exceeds the first threshold, the target node is not in the congestion state yet, but at least one first node has been congested. The target node sends the flow control information of at least one first node to the second node, and the second node reduces the amount of data sent to the target node after receiving the flow control information. When the buffer size of the target node exceeds the second threshold, this indicates that the target node has been in the congested state. At this time, the target node generates its own flow control information and sends the generated flow control information to the second node, so that the second node further reduces the amount of data sent to the target node. At this time, the target node may only send its own flow control information or may send its own flow control information and the flow control information of the child node of the target node and/or the lower layer node of the child node to the second node.

In an optional embodiment, each flow control information may correspond to a path or an RLC channel.

When the flow control information corresponds to a path, the flow control information may be sent according to the routing path granularity, that is, the flow control information may be reporting the buffer size per routing path granularity, that is, reporting the buffer size of data on each route.

The route refers to a path from the UE to the IAB donor, during which a plurality of IAB nodes may be passed through. The route is uniformly configured by the IAB donor, and a plurality of routes, i.e., a routing table, may be configured. The data transmitted in the IAB network is all transmitted based on routing.

When the flow control information corresponds to an RLC channel, the flow control information may be sent according to the granularity of the RLC channel, that is, the flow control information may be reporting the buffer size per RLC channel (each RLC channel) granularity, that is, reporting the buffer size of data on each RLC channel. The RLC channel refers to a logical channel between the IAB node and its parent node, for transmitting data.

When each flow control information corresponds to a path or an RRC channel, the first threshold value has a corresponding relationship with the flow control information type, that is, has a corresponding relationship with the path or RLC channel.

The path is taken as an example below for description.

In order to ensure that the data in a path with high priority is earlier than the data in a path with low priority, the first threshold value is less than or equal to the second threshold value corresponding to a same path; and among different paths, the first threshold value corresponding to the path with high priority is less than the first threshold value corresponding to the path with low priority, and/or the second threshold value corresponding to the path with high priority is less than the second threshold value corresponding to the path with low priority.

In a specific implementation, if the buffer size of the target node exceeds the first threshold value corresponding to a path, the target node sends the flow control information of at least one first node corresponding to the path to the second node; and/or
if the buffer size of the target node exceeds the second threshold value corresponding to a path, the target node sends the flow control information of the target node corresponding to the path to the second node, or sends the flow control information of the target node corresponding to the path and the flow control information of at least one first node corresponding to the path to the second node.

The above description takes the path as an example. The implementation of the RLC channel is the same as that of the path, and details are not repeated here.

In a second way: the target node sends the flow control information of the target node and/or the flow control information of at least one first node to the second node according to a timestamp in the flow control information.

The flow control information can also carry a timestamp, which is generated by the node itself. For example, the timestamp of the target node can be the moment at which the target node generates the flow control information MAC CE, and the timestamp of the first node can be the moment at which the first node generates the flow control information. If a node generates the flow control information, it means that this node is congested.

In a specific implementation, if the difference between the timestamp in the flow control information of the target node and the current moment is less than or equal to a time threshold value, the flow control information of the target node is sent to the second node; and/or
if the difference between the timestamp in the flow control information of the first node and the current moment is less than or equal to the time threshold value, the flow control information of the first node is sent to the second node.

It should be noted that the event that the difference between the timestamp in the flow control information and the current time is less than or equal to the time threshold value means that the timestamp is valid, that is, the node that generated the timestamp may still be congested, so the flow control information of this node is sent to the second node, so that the second node reduces the amount of data sent to this node.

On the other hand, if the time difference between the timestamp in the flow control information of the target node or the flow control information of the first node and the current moment is greater than the time threshold value, the target node discards the flow control information.

The event that the difference between the timestamp in the flow control information and the current time is greater than the time threshold value means that the timestamp has expired, that is, the congestion of the node that generated the timestamp may have been resolved, so the target node discards the flow control information.

The time threshold value in the embodiment of the disclosure may be configured according to the host node or the OAM device.

In some embodiments, each flow control information may correspond to a path or an RLC channel.

When each flow control information corresponds to a path or an RRC channel, the time threshold value has a corresponding relationship with the flow control information type, that is, the time threshold value has a corresponding relationship with the path or RLC channel.

The following description is based on the fact that the time threshold value has a corresponding relationship with the path.

In different paths, in order to ensure that the congestion in the path with high priority can be solved more effectively, the time threshold value corresponding to the path with high priority is greater than the time threshold value corresponding to the path with low priority.

In a specific implementation, if the difference between the timestamp in the flow control information of the target node corresponding to a path and the current moment is less than or equal to the time threshold value, the target node sends the flow control information of the target node corresponding to the path to the second node; and/or
if the difference between the timestamp in the flow control information of the first node corresponding to a path and the current moment is less than or equal to the time threshold value, the target node sends the flow control information of the first node corresponding to the path to the second node.

In a third way: the target node sends the flow control information of the target node and/or the flow control information of at least one first node to the second node if the target node receives request information from the second node, wherein the request information is used to request the target node to send the flow control information.

It should be noted that the request information here is sent by the second node, and the second node can determine when to send the request information. For example, when determining the amount of data sent to the target node within a specific time unit, the second node may firstly send the request information to check the buffer size of the target node. If the buffer size of the target node is relatively large, the amount of data sent per unit time is reduced; if the buffer size of the target node is relatively small, the amount of data sent per unit time may be increased.

In an implementation, in order to identify the flow control information is from which node in the IAB network, the ID information of the node may be carried in the flow control information, and the ID information may be cell ID information, address information or BAP address information, or may be any one or a combination of the three kinds of information, which is not limited in the embodiments of the disclosure.

In the embodiments of the disclosure, the target node sends the flow control information of the target node and/or the flow control information of at least one first node to the second node, so that the second node adjusts the amount of data sent to the target node according to the received flow control information, wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node. Since the flow control information received by the second node includes the flow control information of the target node and/or at least one first node, the second node can not only adjust the amount of data sent to the target node according to the flow control information of the parent node of the target node and/or the upper layer node of the parent node, but also adjust the amount of data sent to the target node according to the flow control information of the child node of the target node and/or the lower layer node of the child node, so that the congestion of nodes can be quickly alleviated, increasing the data transmission efficiency.

For the sake of understanding, the disclosure will be illustrated below with specific embodiments.

The nodes in Embodiments 1 to 7 below refer to the nodes in Figure 1.

### Embodiment 1.

As shown in FIG. 4, it is a flowchart of a flow control method according to an embodiment of the disclosure.

S401: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S402: the IAB node 2 judges whether the buffer size of the IAB node 2 is greater than the first threshold value, if so, S403 is performed; otherwise, S401 is performed.

S403: the IAB node 2 sends the flow control information of the IAB node 3, the child node of the IAB node 3 and/or the descendant node of the IAB node 3 to the IAB node 1.

S404: the IAB node 2 judges whether the buffer size of the IAB node 2 is greater than the second threshold value, if so, S405 is performed; otherwise, S401 is performed.

S405: the IAB node 2 sends the flow control information of the IAB node 2, or sends the flow control information of the IAB node 2 and some or all of: the IAB node 3, the child node of the IAB node 3, and the descendant node of the IAB node 3.

### Embodiment 2.

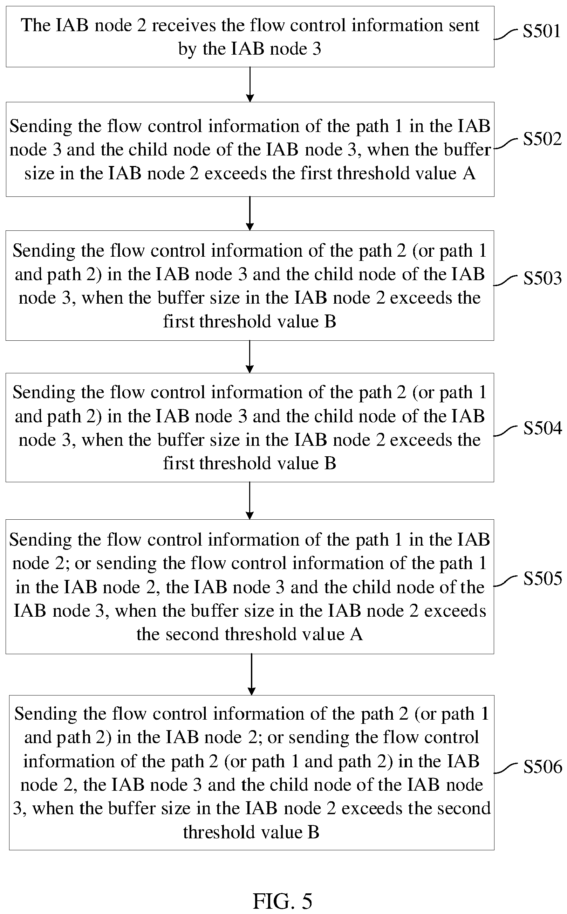

As shown in FIG. 5, it is a flowchart of another flow control method according to an embodiment of the disclosure.

The IAB network includes a path 1 and a path 2, and the priority of the path 1 is higher than that of the path 2. The IAB donor or the OAM configures that the first threshold value A and the second threshold value A correspond to the path 1, and the first threshold value B and the second threshold value B correspond to the path 2, wherein the first threshold value A is less than the first threshold value B, the second threshold value A is less than the second threshold value B, and both the first threshold value A and the first threshold value B are less than or equal to the second threshold value A and the second threshold value B.

S501: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S502: sending the flow control information of the path 1 in the IAB node 3, the child node of the IAB node 3 and/or the descendant node of the IAB node 3, when the buffer size in the IAB node 2 exceeds the first threshold value A.

S503: sending the flow control information of the path 2 (or path 1 and path 2) in the IAB node 3, the child node of the IAB node 3 and/or the descendant node of the IAB node 3, when the buffer size in the IAB node 2 exceeds the first threshold value B.

S504: sending the flow control information of the path 1 in the IAB node 2; or sending the flow control information of the path 1 in the IAB node 2 and some or all of the IAB node 3, the child node of the IAB node 3 and the descendant node of the IAB node 3, when the buffer size in the IAB node 2 exceeds the second threshold value A.

S505: sending the flow control information of the path 2 (or path 1 and path 2) in the IAB node 2; or sending the flow control information of the path 2 (or path 1 and path 2) in the IAB node 2 and some or all of the IAB node 3, the child node of the IAB node 3 and the descendant node of the IAB node 3, when the buffer size in the IAB node 2 exceeds the second threshold value B.

S506: sending the flow control information of the path 2 (or path 1 and path 2) in the IAB node 2; or sending the flow control information of the path 2 (or path 1 and path 2) in the IAB node 2, the IAB node 3 and the child node of the IAB node 3, when the buffer size in the IAB node 2 exceeds the second threshold value B.

### Embodiment 3.

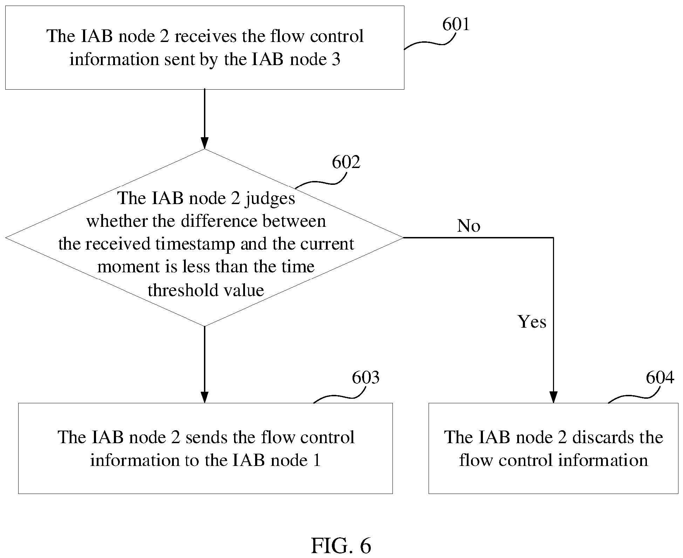

As shown in FIG. 6, it is a flowchart of another flow control method according to an embodiment of the disclosure.

S601: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S602: the IAB node 2 judges whether the difference between the timestamp included in the received flow control information and the current moment is less than the time threshold value, if so, S603 is performed; otherwise, S604 is performed.

S603: the IAB node 2 sends the flow control information to the IAB node 1.

S604: the IAB node 2 discards the flow control information.

### Embodiment 4.

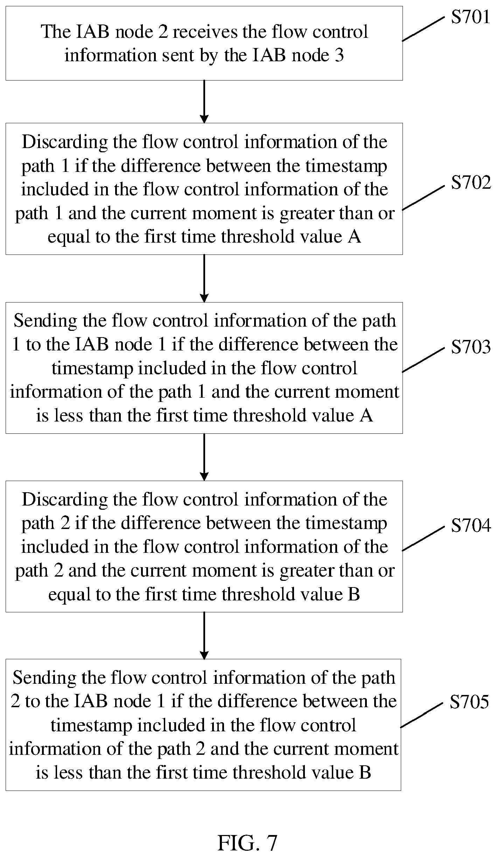

As shown in FIG. 7, it is a flowchart of another flow control method according to an embodiment of the disclosure.

The IAB network includes a path 1 and a path 2, and the priority of the path 1 is higher than that of the path 2. The IAB donor or the OAM configures that the first time threshold value A corresponds to the path 1, and the first time threshold value B corresponds to the path 2, wherein the first time threshold value A is greater than the first time threshold value B.

S701: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S702: discarding the flow control information of the path 1 if the difference between the timestamp included in the flow control information of the path 1 and the current moment is greater than or equal to the first time threshold value A.

S703: sending the flow control information of the path 1 to the IAB node 1 if the difference between the timestamp included in the flow control information of the path 1 and the current moment is less than the first time threshold value A.

S704: discarding the flow control information of the path 2 if the difference between the timestamp included in the flow control information of the path 2 and the current moment is greater than or equal to the first time threshold value B.

S705: sending the flow control information of the path 2 to the IAB node 1 if the difference between the timestamp included in the flow control information of the path 2 and the current moment is less than the first time threshold value B.

### Embodiment 5.

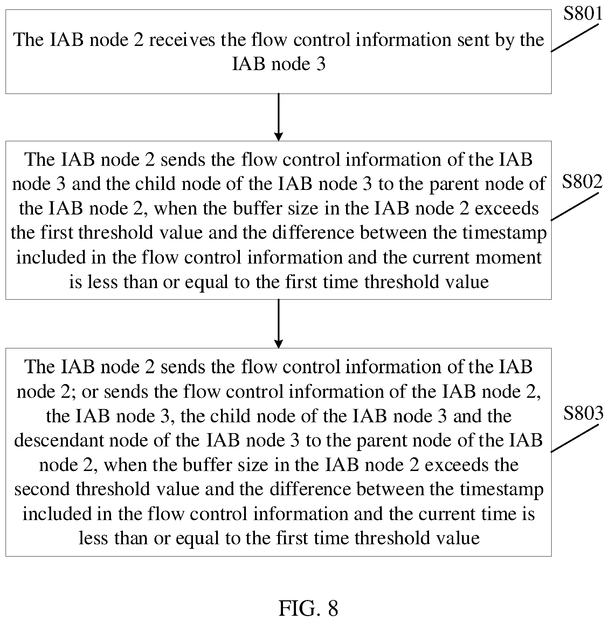

As shown in FIG. 8, it is a flowchart of another flow control method according to an embodiment of the disclosure.

S801: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S802: the IAB node 2 sends the flow control information of the IAB node 3, the child node of the IAB node 3 and/or the descendant node of the IAB node 3 to the IAB node 1, when the buffer size in the IAB node 2 exceeds the first threshold value and the difference between the timestamp included in the flow control information and the current moment is less than or equal to the first time threshold value.

S803: the IAB node 2 sends the flow control information of the IAB node 2; or sends the flow control information of the IAB node 2 and some or all of the IAB node 3, the child node of the IAB node 3 and the descendant node of the IAB node 3 to the IAB node 1, when the buffer size in the IAB node 2 exceeds the second threshold value and the difference between the timestamp included in the flow control information and the current time is less than or equal to the first time threshold value.

### Embodiment 6.

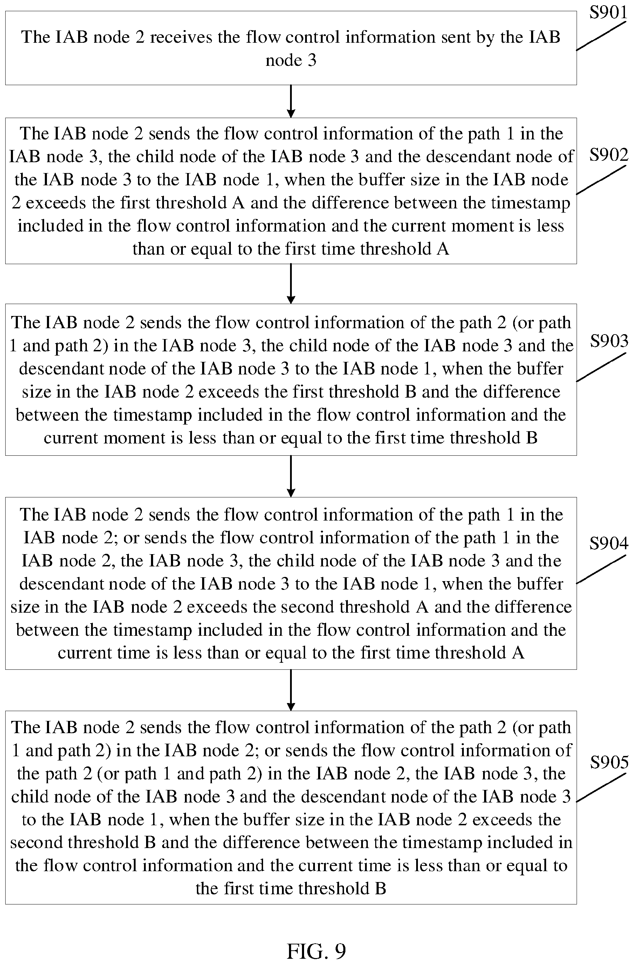

As shown in FIG. 9, it is a flowchart of another flow control method according to an embodiment of the disclosure.

Different thresholds are configured according to the priorities of the routing paths. For example, the IAB network includes a path 1 and a path 2, and the priority of the path 1 is higher than that of the path 2. The IAB donor or the OAM configures that the first threshold A and the second threshold A correspond to the path 1, and the first threshold B and the second threshold B correspond to the path 2, wherein the first threshold A is less than the first threshold B, the second threshold A is less than the second threshold B, and the first threshold A and the first threshold B are both less than or equal to the second threshold A and the second threshold B; the IAB donor or the OAM configures that the first time threshold A corresponds to the path 1, and the first time threshold B corresponds to the path 2, wherein the first time threshold A is greater than the first time threshold B.

S901: the IAB node 2 receives the flow control information sent by the IAB node 3.

Here, the flow control information sent by the IAB node 3 includes some or all of: the flow control information of the IAB node 3, the flow control information of a child node of the IAB node 3, and the flow control information of a descendant node of the IAB node 3.

S902: the IAB node 2 sends the flow control information of the path 1 in the IAB node 3, the child node of the IAB node 3 and/or the descendant node of the IAB node 3 to the IAB node 1, when the buffer size in the IAB node 2 exceeds the first threshold A and the difference between the timestamp included in the flow control information and the current moment is less than or equal to the first time threshold A.

S903: the IAB node 2 sends the flow control information of the path 2 (or path 1 and path 2) in the IAB node 3, the child node of the IAB node 3 and/or the descendant node of the IAB node 3 to the IAB node 1, when the buffer size in the IAB node 2 exceeds the first threshold B and the difference between the timestamp included in the flow control information and the current moment is less than or equal to the first time threshold B.

S904: the IAB node 2 sends the flow control information of the path 1 in the IAB node 2; or sends the flow control information of the path 1 in the IAB node 2 and some or all of the IAB node 3, the child node of the IAB node 3 and the descendant node of the IAB node 3 to the IAB node 1, when the buffer size in the IAB node 2 exceeds the second threshold A and the difference between the timestamp included in the flow control information and the current time is less than or equal to the first time threshold A.

S905: the IAB node 2 sends the flow control information of the path 2 (or path 1 and path 2) in the IAB node 2; or sends the flow control information of the path 2 (or path 1 and path 2) in the IAB node 2 and some or all of the IAB node 3, the child node of the IAB node 3 and the descendant node of the IAB node 3 to the IAB node 1, when the buffer size in the IAB node 2 exceeds the second threshold B and the difference between the timestamp included in the flow control information and the current time is less than or equal to the first time threshold B.

### Embodiment 7.

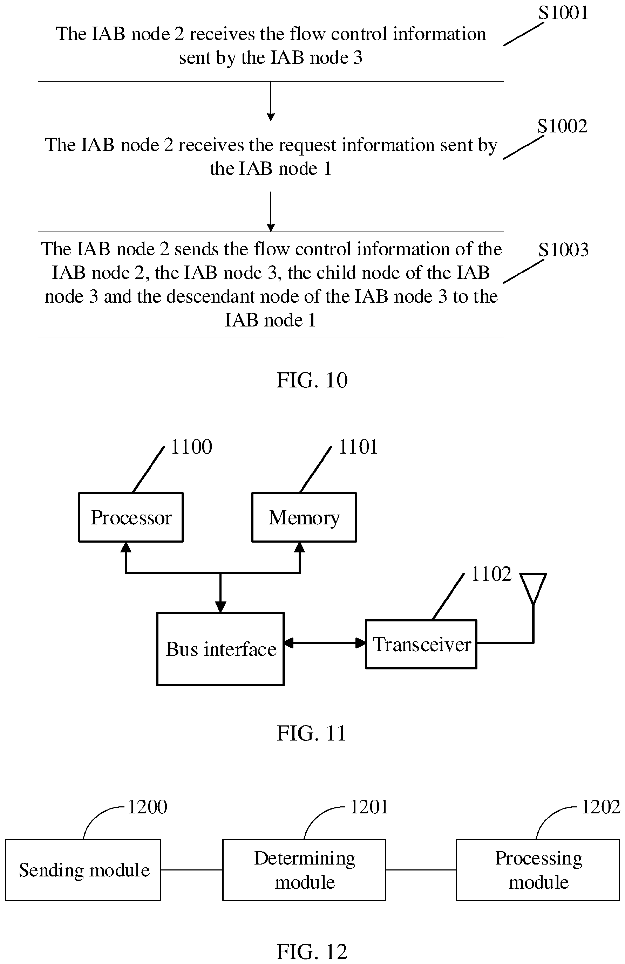

As shown in FIG. 10, it is a flowchart of another flow control method according to an embodiment of the disclosure.

S1001: the IAB node 2 receives the flow control information sent by the IAB node 3.

S1002: the IAB node 2 receives the request information sent by the IAB node 1.

The request information is used to request the IAB node 2 to send the flow control information.

S1003: the IAB node 2 sends the flow control information of the IAB node 2 and some or all of the IAB node 3, the child node of the IAB node 3 and the descendant node of the IAB node 3 to the IAB node 1.

It should be noted that the above embodiments are embodiments for the DL flow control (that is, the first node sends the flow control information to its parent node), and the embodiments for the UL flow control (that is, the first node sends the flow control information to its child node) may refer to the above embodiments, except that the IAB node 2 receives the flow control information of the IAB node 1 and sends it to the IAB node 3.

Based upon the same inventive concept, an embodiment of the disclosure provides a flow control device. Since the principle of this device to solve the problem is similar to that of this method, the implementations of this device can refer to the implementations of the method, and the repeated description thereof will be omitted here.

As shown in FIG. 11, a flow control device according to an embodiment of the disclosure includes:
a processor 1100, a memory 1101 and a transceiver 1102.

The processor 1100 is responsible for managing the bus architecture and general processing, and the memory 1101 may store the data used by the processor 1100 when performing the operations. The transceiver 1102 is configured to receive and send the data under the control of the processor 1100.

The bus architecture may include any numbers of interconnected buses and bridges, and specifically link various circuits of one or more processors 1100 represented by the processor 1100 and the memory represented by the memory 1101. The bus architecture may further link various other circuits such as peripheral device, voltage regulator and power management circuit, which are all well known in the art and thus will not be further described again herein. The bus interface provides an interface. The processor 1100 is responsible for managing the bus architecture and general processing, and the memory 1101 may store the data used by the processor 1100 when performing the operations.

The procedure disclosed by the embodiment of the disclosure may be applied in the processor 1100 or implemented by the processor 1100. In the implementation process, each step of the signal processing flow may be completed by the integrated logic circuit of hardware in the processor 1100 or the instruction in the form of software. The processor 1100 may be a general-purpose processor 1100, a digital signal processor 1100, an application specific integrated circuit, a field programmable gate array or other programmable logic device, a discrete gate or transistor logic device, or a discrete hardware component, and may implement or perform each method, step and logical block diagram disclosed in the embodiments of the disclosure. The general-purpose processor 1100 may be a microprocessor 1100 or any conventional processor 1100, etc. The steps of the method disclosed in combination with the embodiments of the disclosure may be directly completed by a hardware processor 1100, or completed by a combination of hardware and software modules in the processor 1100. The software modules may be located in the random access memory, flash memory, read only memory, programmable read only memory or electrically erasable programmable read only memory, register and other mature storage medium in the art. The storage medium is located in the memory 1101, and the processor 1100 reads the information in the memory 1101 and completes the steps of the signal processing flow in combination with its hardware.

Here, the processor 1100 is configured to read a program in the memory 1101 and perform the process of:
sending flow control information of a target node and/or flow control information of at least one first node to a second node, so that the second node adjusts amount of data sent to the target node according to the received flow control information;
wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

Optionally, the processor 1100 sends the flow control information of the target node and/or the flow control information of at least one first node to the second node in some or all of following ways:
in a first way: send the flow control information of the target node and/or the flow control information of at least one first node to the second node according to a buffer size of the target node;
in a second way: send the flow control information of the target node and/or the flow control information of at least one first node to the second node according to a timestamp in the flow control information;
in a third way: send the flow control information of the target node and/or the flow control information of at least one first node to the second node if the target node receives request information from the second node, wherein the request information is used to request the target node to send the flow control information.

Optionally, when sending the flow control information of the target node and/or the flow control information of at least one first node to the second node, the processor 1100 is specifically configured to:
send the flow control information of the target node and/or the flow control information of at least one first node to the second node through an RRC message or an MAC CE.

Optionally, when sending the flow control information of the target node and/or the flow control information of at least one first node to the second node according to the buffer size of the target node, the processor 1100 is specifically configured to:
send the flow control information of at least one first node to the second node if the buffer size of the target node exceeds a first threshold value; and/or
send the flow control information of the target node to the second node or the flow control information of the target node and the flow control information of at least one first node to the second node if the buffer size of the target node exceeds a second threshold value;
wherein the first threshold value is less than or equal to the second threshold value.

Optionally, the processor 1100 is further configured to:
determine a first threshold value and/or a second threshold value of a host node, or a first threshold value and/or a second threshold value configured by an OAM device.

Optionally, each flow control information corresponds to a path or an RLC channel.

Optionally, there is a correspondence between first threshold values and flow control information types; and when sending the flow control information of the target node and/or the flow control information of at least one first node to the second node according to the buffer size of the target node, the processor 1100 is specifically configured to:
send the flow control information of at least one first node corresponding to a flow control information type to the second node if the buffer size of the target node exceeds a first threshold value corresponding to the flow control information type; and/or
send the flow control information of the target node corresponding to a flow control information type to the second node or the flow control information of the target node corresponding to the flow control information type and the flow control information of at least one first node corresponding to the flow control information type to the second node if the buffer size of the target node exceeds a second threshold value corresponding to the flow control information type;
wherein a first threshold value is less than or equal to a second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

Optionally, when sending the flow control information of the target node and/or the flow control information of at least one first node to the second node according to the timestamp in the flow control information, the processor 1100 is specifically configured to:
send the flow control information of the target node to the second node if a difference between the timestamp in the flow control information of the target node and a current moment is less than or equal to a time threshold value; and/or
send the flow control information of the first node to the second node if a difference between the timestamp in the flow control information of the first node and the current moment is less than or equal to the time threshold value.

Optionally, the processor 1100 is further configured to:
discard the flow control information if the difference between the timestamp in the flow control information of the target node or the flow control information of the first node and the current moment is greater than the time threshold value.

Optionally, the processor 1100 is further configured to:
determine the time threshold value according to a configuration of a host node or an OAM device.

Optionally, each flow control information corresponds to a path or an RLC channel.

Optionally, there is a correspondence between the time threshold value and flow control information type; and the processor 1100 is specifically configured to:
send the flow control information of the target node corresponding to the flow control information type to the second node if a difference between the timestamp in the flow control information of the target node corresponding to the flow control information type and the current moment is less than or equal to the time threshold value; and/or
send the flow control information of the first node corresponding to the flow control information type to the second node if a difference between the timestamp in the flow control information of the first node corresponding to the flow control information type and the current moment is less than or equal to the time threshold value;
wherein: among different flow control information types, a time threshold value corresponding to a flow control information type with high priority is greater than a time threshold value corresponding to a flow control information type with low priority, and the flow control information type is path or RLC channel.

Optionally, the flow control information includes ID information of a corresponding node, wherein the ID information includes some or all of:
cell ID information;
address information;
BAP address information.

As shown in FIG. 12, another flow control device according to an embodiment of the disclosure includes:
a sending module 1200, configured to send flow control information of a target node and/or flow control information of at least one first node to a second node, so that the second node adjusts amount of data sent to the target node according to the received flow control information;
wherein: if the first node is a child node of the target node and/or a lower layer node of the child node, the second node is a parent node of the target node and/or an upper layer node of the parent node; or if the first node is a parent node of the target node and/or an upper layer node of the parent node, the second node is a child node of the target node and/or a lower layer node of the child node.

Optionally, the sending module 1200 sends the flow control information of the target node and/or the flow control information of at least one first node to the second node in some or all of following ways:
in a first way: send the flow control information of the target node and/or the flow control information of at least one first node to the second node according to a buffer size of the target node;
in a second way: send the flow control information of the target node and/or the flow control information of at least one first node to the second node according to a timestamp in the flow control information;
in a third way: send the flow control information of the target node and/or the flow control information of at least one first node to the second node if the target node receives request information from the second node, wherein the request information is used to request the target node to send the flow control information.

Optionally, when sending the flow control information of the target node and/or the flow control information of at least one first node to the second node, the sending module 1200 is specifically configured to:
send the flow control information of the target node and/or the flow control information of at least one first node to the second node through an RRC message or an MAC CE.

Optionally, when sending the flow control information of the target node and/or the flow control information of at least one first node to the second node according to the buffer size of the target node, the sending module 1200 is specifically configured to:
send the flow control information of at least one first node to the second node if the buffer size of the target node exceeds a first threshold value; and/or
send the flow control information of the target node to the second node or the flow control information of the target node and the flow control information of at least one first node to the second node if the buffer size of the target node exceeds a second threshold value;
wherein the first threshold value is less than or equal to the second threshold value.

Optionally, the device further includes a determining module 1201 specifically configured to:
determine a first threshold value and/or a second threshold value of a host node, or a first threshold value and/or a second threshold value configured by an OAM device.

Optionally, each flow control information corresponds to a path or an RLC channel.

Optionally, there is a correspondence between first threshold values and flow control information types; and when sending the flow control information of the target node and/or the flow control information of at least one first node to the second node according to the buffer size of the target node, the sending module 1200 is specifically configured to:
send the flow control information of at least one first node corresponding to a flow control information type to the second node if the buffer size of the target node exceeds a first threshold value corresponding to the flow control information type; and/or
send the flow control information of the target node corresponding to a flow control information type to the second node or the flow control information of the target node corresponding to the flow control information type and the flow control information of at least one first node corresponding to the flow control information type to the second node if the buffer size of the target node exceeds a second threshold value corresponding to the flow control information type;
wherein a first threshold value is less than or equal to a second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

Optionally, when sending the flow control information of the target node and/or the flow control information of at least one first node to the second node according to the timestamp in the flow control information, the sending module 1200 is specifically configured to:
send the flow control information of the target node to the second node if a difference between the timestamp in the flow control information of the target node and a current moment is less than or equal to a time threshold value; and/or
send the flow control information of the first node to the second node if a difference between the timestamp in the flow control information of the first node and the current moment is less than or equal to the time threshold value.

Optionally, the device includes a processing module 1202 specifically configured to:
discard the flow control information if the difference between the timestamp in the flow control information of the target node or the flow control information of the first node and the current moment is greater than the time threshold value.

Optionally, the determining module 1201 is further configured to:
determine the time threshold value according to a configuration of a host node or an OAM device.

Optionally, each flow control information corresponds to a path or an RLC channel.

Optionally, there is a correspondence between the time threshold value and flow control information type; and the sending module 1200 is specifically configured to:
send the flow control information of the target node corresponding to the flow control information type to the second node if a difference between the timestamp in the flow control information of the target node corresponding to the flow control information type and the current moment is less than or equal to the time threshold value; and/or
send the flow control information of the first node corresponding to the flow control information type to the second node if a difference between the timestamp in the flow control information of the first node corresponding to the flow control information type and the current moment is less than or equal to the time threshold value;
wherein: among different flow control information types, a time threshold value corresponding to a flow control information type with high priority is greater than a time threshold value corresponding to a flow control information type with low priority, and the flow control information type is path or RLC channel.

Optionally, the flow control information includes ID information of a corresponding node, wherein the ID information includes some or all of:
cell ID information;
address information;
BAP address information.

Further, an embodiment of the disclosure further provides a computer-readable non-volatile storage medium including program codes. When the program codes run on a computing terminal, the program codes are configured to cause the computing terminal to perform the steps of the flow control of the embodiments of the disclosure described above.

The disclosure has been described above by reference to the block diagrams and/or flow charts showing the methods, devices (systems) and/or computer program products according to the embodiments of the disclosure. It should be understood that one block shown in the block diagrams and/or flow charts and a combination of the blocks shown in the block diagrams and/or flow charts can be implemented by the computer program instructions. These computer program instructions can be provided to a general-purpose computer, a processor of a dedicated computer and/or another programmable data processing unit to produce a machine, so that the instructions executed by the computer processor and/or another programmable data processing unit create the methods for implementing the functions and/or actions specified in the blocks of the block diagrams and/or flow charts.

Correspondingly, the disclosure can also be implemented by the hardware and/or software (including the firmware, resident software, microcode and the like). Further, the disclosure can adopt the form of computer program products on the computer usable or computer readable storage medium, which has the computer usable or computer readable program codes implemented in the medium, to be used by the instruction execution system or used in combination with the instruction execution system. In the context of the disclosure, the computer usable or computer readable storage medium can be any medium, which can contain, store, communicate with, transmit or transfer the programs, to be used by the instruction execution system, apparatus or device, or used in combination with the instruction execution system, apparatus or device.

Evidently those skilled in the art can make various modifications and variations to the disclosure without departing from the spirit and scope of the disclosure. Thus the disclosure is also intended to encompass these modifications and variations to the disclosure as long as these modifications and variations come into the scope of the claims of the disclosure and their equivalents.

## Claims

1. A flow control method, comprising:
sending, by a target node, a flow control information of the target node and/or a flow control information of at least one first node to a second node, the flow control information is used for adjusting amount of data sent to the target node;
wherein the first node is a child node of the target node and/or a lower layer node of the child node, the second node is a parent node of the target node and/or an upper layer node of the parent node; or, the first node is a parent node of the target node and/or an upper layer node of the parent node, the second node is a child node of the target node and/or a lower layer node of the child node.

2. The method of claim 1, wherein the target node sends the flow control information of the target node and/or the flow control information of at least one first node to the second node in some or all of following ways:
a first way: sending, by the target node, the flow control information of the target node and/or the flow control information of at least one first node to the second node according to a buffer size of the target node;
a second way: sending, by the target node, the flow control information of the target node and/or the flow control information of at least one first node to the second node according to a timestamp in the flow control information;
a third way: sending, by the target node, the flow control information of the target node and/or the flow control information of at least one first node to the second node in response to the target node receiving a request information from the second node, wherein the request information is used to request the target node to send the flow control information.

3. The method of claim 2, wherein the sending, by the target node, the flow control information of the target node and/or the flow control information of at least one first node to the second node, comprises:
sending, by the target node, the flow control information of the target node and/or the flow control information of at least one first node to the second node through a Radio Resource Control, RRC, message or a Medium Access Control Control Element, MAC CE.

4. The method of claim 2 or 3, wherein the sending, by the target node, the flow control information of the target node and/or the flow control information of at least one first node to the second node according to the buffer size of the target node, comprises:
sending, by the target node, the flow control information of at least one first node to the second node in response to the buffer size of the target node exceeding a first threshold value; and/or
sending, by the target node, the flow control information of the target node to the second node or the flow control information of the target node and the flow control information of at least one first node to the second node in response to the buffer size of the target node exceeding a second threshold value;
wherein the first threshold value is less than or equal to the second threshold value.

5. The method of claim 4, further comprising:
determining, by the target node, a first threshold value and/or a second threshold value of a host node, or a first threshold value and/or a second threshold value configured by an Operations Administration and Maintenance, OAM, device.

6. The method of claim 4, wherein each flow control information corresponds to a path or a Radio Link Control, RLC, channel.

7. The method of claim 6, wherein there is a correspondence between the first threshold value and a flow control information type;
the sending, by the target node, the flow control information of the target node and/or the flow control information of at least one first node to the second node according to the buffer size of the target node, comprises:
sending, by the target node, the flow control information of at least one first node corresponding to the flow control information type to the second node in response to the buffer size of the target node exceeding the first threshold value corresponding to the flow control information type; and/or
sending, by the target node, the flow control information of the target node corresponding to the flow control information type to the second node or the flow control information of the target node corresponding to the flow control information type and the flow control information of at least one first node corresponding to the flow control information type to the second node in response to the buffer size of the target node exceeding a second threshold value corresponding to the flow control information type;
wherein the first threshold value is less than or equal to the second threshold value, in response to the first threshold value and the second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

8. The method of claim 2 or 3, wherein the sending, by the target node, the flow control information of the target node and/or the flow control information of at least one first node to the second node according to the timestamp in the flow control information, comprises:
sending, by the target node, the flow control information of the target node to the second node in response to a difference between the timestamp in the flow control information of the target node and a current moment being less than or equal to a time threshold value; and/or
sending, by the target node, the flow control information of the first node to the second node in response to a difference between the timestamp in the flow control information of the first node and the current moment being less than or equal to the time threshold value.

9. The method of claim 8, further comprising:
discarding, by the target node, the flow control information in response to the difference between the timestamp in the flow control information of the target node and the current moment being greater than the time threshold value or the difference between the flow control information of the first node and the current moment being greater than the time threshold value.

10. The method of claim 9, further comprising:
determining, by the target node, the time threshold value according to a configuration of a host node or an OAM device.

11. The method of claim 9, wherein each flow control information corresponds to a path or an RLC channel.

12. The method of claim 11, wherein there is a correspondence between the time threshold value and a flow control information type, and the method further comprises:
sending, by the target node, the flow control information of the target node corresponding to the flow control information type to the second node in response to a difference between the timestamp in the flow control information of the target node corresponding to the flow control information type and the current moment is less than or equal to the time threshold value; and/or
sending, by the target node, the flow control information of the first node corresponding to the flow control information type to the second node in response to a difference between the timestamp in the flow control information of the first node corresponding to the flow control information type and the current moment is less than or equal to the time threshold value;
wherein among different flow control information types, a time threshold value corresponding to a flow control information type with high priority is greater than a time threshold value corresponding to a flow control information type with low priority, and the flow control information type is path or RLC channel.

13. The method of any one of claims 1 to 3, 5 to 7 and 9 to 12, wherein the flow control information comprises Identifier, ID, information of a corresponding node, wherein the ID information comprises some or all of:
cell ID information;
address information;
Backhaul Adaptation Protocol, BAP, address information.

14. A flow control device, comprising: a processor, a memory and a transceiver:
wherein the processor is configured to read a program in the memory and perform followings:
sending a flow control information of a target node and/or a flow control information of at least one first node to a second node, the flow control information is used for adjusting amount of data sent to the target node;
wherein the first node is a child node of the target node and/or a lower layer node of the child node, the second node is a parent node of the target node and/or an upper layer node of the parent node; or the first node is a parent node of the target node and/or an upper layer node of the parent node, the second node is a child node of the target node and/or a lower layer node of the child node.

15. The device of claim 14, wherein the processor is configured to send the flow control information of the target node and/or the flow control information of at least one first node to the second node in some or all of following ways:
a first way: sending the flow control information of the target node and/or the flow control information of at least one first node to the second node according to a buffer size of the target node;
a second way: sending the flow control information of the target node and/or the flow control information of at least one first node to the second node according to a timestamp in the flow control information;
a third way: sending the flow control information of the target node and/or the flow control information of at least one first node to the second node in response to the target node receiving a request information from the second node, wherein the request information is used to request the target node to send the flow control information.

16. The device of claim 15, wherein the processor is configured to send the flow control information of the target node and/or the flow control information of at least one first node to the second node by:
sending the flow control information of the target node and/or the flow control information of at least one first node to the second node through a Radio Resource Control, RRC, message or a Medium Access Control Control Element, MAC CE.

17. The device of claim 15 or 16, wherein the processor is configured to send the flow control information of the target node and/or the flow control information of at least one first node to the second node according to the buffer size of the target node by:
sending the flow control information of at least one first node to the second node in response to the buffer size of the target node exceeding a first threshold value; and/or
sending the flow control information of the target node to the second node or the flow control information of the target node and the flow control information of at least one first node to the second node in response to the buffer size of the target node exceeding a second threshold value;
wherein the first threshold value is less than or equal to the second threshold value.

18. The device of claim 15, wherein the processor is further configured to:
determine a first threshold value and/or a second threshold value of a host node, or a first threshold value and/or a second threshold value configured by an Operations Administration and Maintenance, OAM, device.

19. The device of claim 17, wherein each flow control information corresponds to a path or a Radio Link Control, RLC, channel.

20. The device of claim 19, wherein there is a correspondence between the first threshold value and a flow control information types; and the processor is configured to send the flow control information of the target node and/or the flow control information of at least one first node to the second node according to the buffer size of the target node, by:
sending the flow control information of at least one first node corresponding to the flow control information type to the second node in response to the buffer size of the target node exceeding the first threshold value corresponding to the flow control information type; and/or
sending the flow control information of the target node corresponding to a flow control information type to the second node or the flow control information of the target node corresponding to the flow control information type and the flow control information of at least one first node corresponding to the flow control information type to the second node in response to the buffer size of the target node exceeding the second threshold value corresponding to the flow control information type;
wherein the first threshold value is less than or equal to the second threshold value, in response to the first threshold value and the second threshold value correspond to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

21. The device of claim 15 or 16, wherein the processor is configured to send the flow control information of the target node and/or the flow control information of at least one first node to the second node according to the timestamp in the flow control information, by:
sending the flow control information of the target node to the second node in response to a difference between the timestamp in the flow control information of the target node and a current moment is less than or equal to a time threshold value; and/or
sending the flow control information of the first node to the second node in response to a difference between the timestamp in the flow control information of the first node and the current moment is less than or equal to the time threshold value.

22. The device of claim 21, wherein the processor is further configured to:
discard the flow control information in response to the difference between the timestamp in the flow control information of the target node and the current moment being greater than the time threshold value, or the difference between the flow control information of the first node and the current moment being greater than the time threshold value.

23. The device of claim 22, wherein the processor is further configured to:
determine the time threshold value according to a configuration of a host node or an OAM device.

24. The device of claim 22, wherein each flow control information corresponds to a path or an RLC channel.

25. The device of claim 24, wherein there is a correspondence between the time threshold value and flow control information type; and the processor is configured to:
send the flow control information of the target node corresponding to the flow control information type to the second node in response to a difference between the timestamp in the flow control information of the target node corresponding to the flow control information type and the current moment being less than or equal to the time threshold value; and/or
send the flow control information of the first node corresponding to the flow control information type to the second node in response to a difference between the timestamp in the flow control information of the first node corresponding to the flow control information type and the current moment being less than or equal to the time threshold value;
wherein among different flow control information types, a time threshold value corresponding to a flow control information type with high priority is greater than a time threshold value corresponding to a flow control information type with low priority, and the flow control information type is path or RLC channel.

26. The device of any one of claims 14 to 16, 18 to 20 and 22 to 25, wherein the flow control information comprises Identifier, ID, information of a corresponding node, wherein the ID information comprises some or all of:
cell ID information;
address information;
Backhaul Adaptation Protocol, BAP, address information.

27. A flow control device, comprising:
a sending module configured to send a flow control information of a target node and/or a flow control information of at least one first node to a second node, the flow control information is used for adjusting amount of data sent to the target node;
wherein the first node is a child node of the target node and/or a lower layer node of the child node, the second node is a parent node of the target node and/or an upper layer node of the parent node; or the first node is a parent node of the target node and/or an upper layer node of the parent node, the second node is a child node of the target node and/or a lower layer node of the child node.

28. The device of claim 27, wherein the sending module sends the flow control information of the target node and/or the flow control information of at least one first node to the second node in some or all of following ways:
a first way: sending the flow control information of the target node and/or the flow control information of at least one first node to the second node according to a buffer size of the target node;
a second way: sending the flow control information of the target node and/or the flow control information of at least one first node to the second node according to a timestamp in the flow control information;
a third way: sending the flow control information of the target node and/or the flow control information of at least one first node to the second node in response to the target node receiving a request information from the second node, wherein the request information is used to request the target node to send the flow control information.

29. The device of claim 28, wherein the sending module is configured to send the flow control information of the target node and/or the flow control information of at least one first node to the second node, by:
sending the flow control information of the target node and/or the flow control information of at least one first node to the second node through an RRC message or an MAC CE.

30. The device of claim 28 or 29, wherein the sending module is configured to send the flow control information of the target node and/or the flow control information of at least one first node to the second node according to the buffer size of the target node, by:
sending the flow control information of at least one first node to the second node in response to the buffer size of the target node exceeding a first threshold value; and/or
sending the flow control information of the target node to the second node or the flow control information of the target node and the flow control information of at least one first node to the second node in response to the buffer size of the target node exceeding a second threshold value;
wherein the first threshold value is less than or equal to the second threshold value.

31. The device of claim 28, further comprising a determining module configured to:
determine a first threshold value and/or a second threshold value of a host node, or a first threshold value and/or a second threshold value configured by an Operations Administration and Maintenance, OAM, device.

32. The device of claim 30, wherein each flow control information corresponds to a path or a Radio Link Control, RLC, channel.

33. The device of claim 32, wherein there is a correspondence between the first threshold values and a flow control information type; and the sending module is configured to send the flow control information of the target node and/or the flow control information of at least one first node to the second node according to the buffer size of the target node, by:
sending the flow control information of at least one first node corresponding to the flow control information type to the second node in response to the buffer size of the target node exceeding the first threshold value corresponding to the flow control information type; and/or
sending the flow control information of the target node corresponding to the flow control information type to the second node or the flow control information of the target node corresponding to the flow control information type and the flow control information of at least one first node corresponding to the flow control information type to the second node in response to the buffer size of the target node exceeding a second threshold value corresponding to the flow control information type;
wherein the first threshold value is less than or equal to the second threshold value in response to the first threshold value and the second threshold value corresponding to a same flow control information type; and among different flow control information types, a first threshold value corresponding to a flow control information type with high priority is less than a first threshold value corresponding to a flow control information type with low priority, and/or a second threshold value corresponding to a flow control information type with high priority is less than a second threshold value corresponding to a flow control information type with low priority; and the flow control information type is path or RLC channel.

34. The device of claim 28 or 29, wherein the sending module is configured to send the flow control information of the target node and/or the flow control information of at least one first node to the second node according to the timestamp in the flow control information, by:
sending the flow control information of the target node to the second node in response to a difference between the timestamp in the flow control information of the target node and a current moment being less than or equal to a time threshold value; and/or
sending the flow control information of the first node to the second node in response to a difference between the timestamp in the flow control information of the first node and the current moment being less than or equal to the time threshold value.

35. The device of claim 34, comprising a processing module configured to:
discard the flow control information in response to the difference between the timestamp in the flow control information of the target node and the current moment being greater the time threshold value; or the difference between the flow control information of the first node and the current moment being greater than the time threshold value.

36. The device of claim 35, wherein the determining module is further configured to:
determine the time threshold value according to a configuration of a host node or an OAM device.

37. The device of claim 35, wherein each flow control information corresponds to a path or an RLC channel.

38. The device of claim 37, wherein the sending module is configured to:
send the flow control information of the target node corresponding to the flow control information type to the second node in response to a difference between the timestamp in the flow control information of the target node corresponding to the flow control information type and the current moment being less than or equal to the time threshold value; and/or
send the flow control information of the first node corresponding to the flow control information type to the second node in response to a difference between the timestamp in the flow control information of the first node corresponding to the flow control information type and the current moment is less than or equal to the time threshold value;
wherein among different flow control information types, a time threshold value corresponding to a flow control information type with high priority is greater than a time threshold value corresponding to a flow control information type with low priority, and the flow control information type is path or RLC channel.

39. The device of any one of claims 27 to 29, 31 to 33 and 35 to 38, wherein the flow control information comprises Identifier, ID, information of a corresponding node, wherein the ID information comprises some or all of:
cell ID information;
address information;
Backhaul Adaptation Protocol, BAP, address information.

40. A computer storable medium storing a computer program thereon, wherein the program, when executed by a processor, implements steps of the method of any one of claims 1 to 13.
